# EUROPEAN PATENT APPLICATION

(11) **EP 2 785 061 A1**
(43) Date of publication of application: **01.10.2014**
(21) Application number: 14159715.3
(22) Date of filing: 14.03.2014
(51) Int. Cl.: H04N 9/31

(54) **Projector and head-up display device and a projector control method**

(30) Priority: 29.03.2013 JP 2013071132
(71) Applicant: Funai Electric Co., Ltd., Daito city Osaka 574-0013 (JP)
(72) Inventor: Nagashima, Kenji, Osaka Osaka 574-0013 (JP); Azuma, Akihiro, Osaka Osaka 574-0013 (JP)
(74) Representative: Osha Liang SARL

(57) **Abstract**

The invention concerns a projector includes a light generator that emits a first light and a second light of mutually differing color components, a light position detector disposed to receive light incident in a direction outside of the projection surface and that detects a position of the incident light, a light scanner that projects the image onto the projection surface by scanning the first light and the second light with a first scanning angle, and that directs the first light and the second light to the light position detector by scanning the first light and the second light with a second scanning angle that is larger than the first scanning angle, and an adjustor that adjusts an emission timing of the first light and an emission timing of the second light so as to suppress relative misalignment between the first light and the second light on the projection surface.

## Description

### Technical Field

The present invention relates generally to a projector for projecting an image onto a projection surface, and to a projector that is used in a head-up display (also termed "HUD") device, or the like.

### Background Art

A projector comprises, for example, a laser light source for outputting a light of a red component (R), a laser light source for outputting a light of a green component (G), and a laser light source for outputting a light of a blue component (B), and directs the lights outputted from these laser light sources onto a projection surface, to project a color image onto the projection surface.

In order to project the color image onto the projection surface without misalignment, the optical axes of the individual laser light sources must be aligned. However, because the enclosure of the projector or an adhesive agent, or the like, expand and contract due to heat, there will be misalignment in the optical axes of the laser light sources. This optical axis misalignment occurs not just due to the effects of heat, but also due to aging. Japanese Unexamined Patent Application Publication 2008-51936 discloses a device for adjusting for the optical axis misalignment by causing dislocation of an optical element through the use of a piezoelectric element.

However, in the method in Japanese Unexamined Patent Application Publication 2008-51936, not only is it necessary to provide a special mechanism for causing the dislocation of the optical element, but it also involves an increase in cost.

### Summary of the Invention

One or more embodiments of the present invention may provide a display device that can adjust optical axis misalignment between light sources while preventing cost increases.

According to one or more embodiments, a projector that projects an image on a projection surface may comprise: a light generator that emits a first light and a second light that are lights of mutually differing color components; a light position detector disposed so as to receive light that is incident in a direction outside of the projection surface and that detects a position of the incident light; a light scanner that projects the image onto the projection surface by scanning the first light and the second light with a first scanning angle, and that directs the first light and the second light to the light position detector by scanning the first light and the second light with a second scanning angle that is larger than the first scanning angle; and an adjustor that adjusts, based on a position of the first light and a position of the second light detected by the light position detector, an emission timing of the first light and an emission timing of the second light so as to suppress relative misalignment between the first light and the second light on the projection surface.

In one or more embodiments, this configuration may make it possible to adjust for misalignment in the optical axes, that is, to adjust the light emission timing, by providing an optical detecting element and having a light scanner scan a light with a second scanning angle that is larger than a first scanning angle that is usually used. This makes it possible to adjust for optical axis misalignment between light sources, while preventing an increase in cost.

According to one or more embodiments, the projector may further comprise a temperature detector that detects a temperature within the projector, wherein the adjustor adjusts, based on the position of the first light and the position of the second light, the emission timing of the first light and the emission timing of the second light so as to suppress relative misalignment between the first light and the second light on the projection surface at the temperature detected by the temperature detector.

This configuration may make it possible to adjust the light emission timing even when there are changes in temperature within the projector, by tracking the temperature changes.

According to one or more embodiments, the projector may further comprise a storage unit that stores a reference table showing a relationship between the temperature within the projector and the emission timing of the first light and the emission timing of the second light, wherein the adjustor calculates, based on the position of the first light and the position of the second light, the emission timing of the first light and the emission timing of the second light so as to suppress relative misalignment between the first light and the second light on the projection surface and updates the reference table value based on the calculated emission timings and the temperature detected by the temperature detector.

This configuration may enable adjustments to the light emission timing even when there is a misalignment in the emission timing due to optical axis misalignment due to aging, through updating a value in a reference table.

According to one or more embodiments, the projector as set forth above may further comprise an enclosure that contains the light scanner and comprises an opening at a position on a light path of the first light and the second light, wherein the first light and the second light are scanned at an angle greater than the first scanning angle and less than the second scanning angle and are blocked at a position on the light path.

Given this configuration, for example, the light directed at the light position detector does not arrive outside of the enclosure. Because of this, the light emission timing can be adjusted without the user being aware.

Moreover, in one or more embodiments of the projector as set forth above, the first light and the second light may be spotlights that are directed to the light position detector by the light scanner.

This configuration may enable the light position detector to detect the positions of the first light and the second light more easily.

According to one or more embodiments, the first light and the second light may be spotlights directed to the light position detector by the light scanner.

This configuration may enable adjustment of the light emission timing without interfering with the image projection.

For example, the light scanner may direct the first light and the second light, by scanning at the second scanning angle, to the light position detector when the projector is started or stopped.

According to one or more embodiments, the light scanner may comprise a first reflecting member for scanning the first light and the second light in a horizontal direction by reciprocating in the horizontal direction; and a second reflecting member for scanning the first light and the second light in a vertical direction by reciprocating in the vertical direction, wherein the first scanning angle and the second scanning angle are scanning angles for the first light and the second light by the second reflecting member, and wherein the light position detector is positioned so as to receive incident light directed outside of the projection surface in the vertical direction.

Moreover, a head-up display device according to one or more embodiments of the present invention may comprise any of the projectors as set forth above and a transparent display panel onto which an image is displayed.

This configuration may make it possible to adjust for misalignment in the optical axes, that is, to adjust the light emission timing, by providing an optical detecting element and having a light scanner scan a light with a second scanning angle that is larger than a first scanning angle that is usually used. This may make it possible to adjust for optical axis misalignment between light sources, while preventing an increase in cost.

One or more embodiments of the present invention may be not only a projector or a head-up display device that is provided with these distinctive processing portions, but may also be a method for controlling a projector through having, as steps, the processes that are executed by the distinctive processing portions that are included in the projector. Moreover, it may also be a program for causing a computer to function as the distinctive processing portions that are included in the projector, or as a program that causes a computer to execute the distinctive steps included in the controlling method for the projector. Moreover, such a program may, of course, be distributed through a computer-readable non-volatile memory medium, such as a CD-ROM (Compact Disc Read-Only Memory) or through a communication network such as the Internet.

One or more embodiments of the present invention enable adjustment for optical axis misalignment between light sources while preventing cost increases.

One or more embodiments of the invention may provide a method for controlling a projector for projecting an image on a projection surface. The method may comprise: emitting a first light and a second light that are lights of mutually differing color components using a light generator; receiving light that is incident in a direction outside of the projection surface and detecting a position of the incident light using a light position detector; scanning the first light and the second light with a first scanning angle; scanning the first light and the second light with a second scanning angle that is larger than the first scanning angle; directing the first light and the second light to the light position detector; and adjusting, based on a position of the first light and a position of the second light detected by the light position detector, an emission timing of the first light and an emission timing of the second light so as to suppress relative misalignment between the first light and the second light on the projection surface.

According to one or more embodiments, the method may comprise: detecting a temperature within the projector (10); and adjusting, based on the position of the first light and the position of the second light, the emission timing of the first light and the emission timing of the second light so as to suppress relative misalignment between the first light and the second light on the projection surface at the temperature detected by the temperature detector.

According to one or more embodiments, the method may further comprise: storing a reference table showing a relationship between the temperature within the projector and the emission timing of the first light and the emission timing of the second light; calculating, based on the position of the first light and the position of the second light, the emission timing of the first light and the emission timing of the second light so as to suppress relative misalignment between the first light and the second light on the projection surface; and updating the reference table value based on the calculated emission timings and the detected temperature.

According to one or more embodiments, the method may comprise: scanning the first light and the second light at an angle greater than the first scanning angle but less than the second scanning angle; and blocking the first light and the second light at a position on the light path.

According to one or more embodiments, the first light and the second light may be spotlights directed to the light position detector by the light scanner.

According to one or more embodiments, the method may further comprise scanning the first light and the second light at the second scanning angle and directing the first light and the second light to the light position detector when the image is not projected onto the projection surface.

According to one or more embodiments, the method may comprise: scanning the first light and the second light in a horizontal direction by reciprocating in the horizontal direction; and scanning the first light and the second light in a vertical direction by reciprocating in the vertical direction.

### Brief Descriptions of the Drawings

FIG. 1 is a diagram illustrating an example of installation of an HUD device according to one or more embodiments of the present invention.
FIG. 2 is a diagram illustrating one example of a view seen by a user through a windshield according to one or more embodiments of the present invention.
FIG. 3 is a block diagram illustrating a hardware configuration for an HUD device according to one or more embodiments of the present invention.
FIG. 4 is a diagram illustrating schematically the layout of the various components within a projector according to one or more embodiments of the present invention.
FIG. 5 is a flowchart for the processes executed by the projector according to one or more embodiments of the present invention.
FIG. 6A is a diagram illustrating one example of a light position detector illuminated by a red laser light according to one or more embodiments of the present invention.
FIG. 6B is a diagram illustrating one example of a light position detector illuminated by a green laser light according to one or more embodiments of the present invention.
FIG. 6C is a diagram illustrating one example of a light position detector illuminated by a blue laser light according to one or more embodiments of the present invention.
FIG. 7A is a diagram illustrating an example of an amount of misalignment between the red laser light and the green laser light in the horizontal direction (Rx - Gx) and an amount of misalignment between the red laser light and the green laser light in the vertical direction (Ry - Gy) according to one or more embodiments of the present invention.
FIG. 7B is a diagram illustrating an example of an amount of misalignment between the red laser light and the blue laser light in the horizontal direction (Rx - Bx) and an amount of misalignment between the red laser light and the blue laser light in the vertical direction (Ry - By) according to one or more embodiments of the present invention.
FIG. 8A is a diagram illustrating an example of a reference table prior to a correction according to one or more embodiments of the present invention.
FIG. 8B is a diagram illustrating an example of a reference table after a correction according to one or more embodiments of the present invention.
FIG. 9A is a graph showing the relationship between the temperature and the amount of misalignment prior to laser light emission timing adjustment according to one or more embodiments of the present invention.
FIG. 9B is a graph showing the relationship between the temperature and the amount of misalignment after laser light emission timing adjustment according to one or more embodiments of the present invention.
FIG. 10 is a graph illustrating the relationship between the temperature and the emission timing adjustment values according to one or more embodiments of the present invention.
FIG. 11 is a flowchart for processes executed when projecting an image onto a combiner according to one or more embodiments of the present invention.
FIG. 12 is a flowchart of processes executed when the projector is stopped according to one or more embodiments of the present invention.

### Detailed Description of the Embodiments

One or more embodiments according to the present invention will be explained in detail below, using the figures. The numeric quantities, shapes, materials, constituent elements, layout locations, and connections between constituent elements, steps, step sequences, and the like shown in the embodiments set forth below are merely examples, and are not intended to limit the present invention.

A projector according to one or more embodiments of the present invention will be explained below, using a head-up display ("HUD") device as an example. An HUD device is a system that may project an image onto the windshield of an automobile, to display a virtual image in front of the windshield (outside of the vehicle) to display the image in the field of view of the user (the driver).

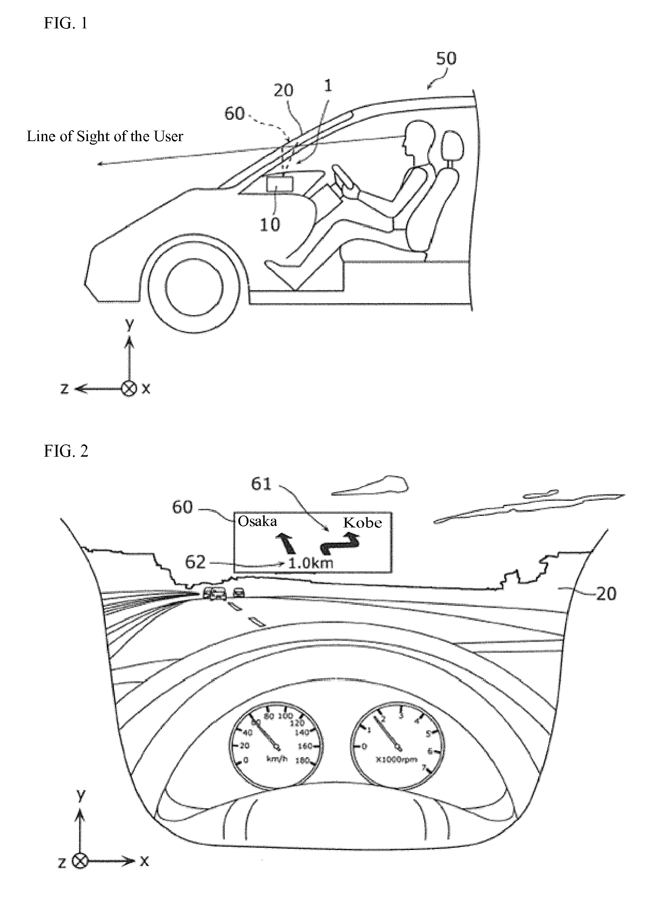

FIG. 1 is a diagram illustrating an example of installation of an HUD device according to one or more embodiments of the present invention. As illustrated in FIG. 1, the HUD device 1 is provided with a projector 10 and a combiner 60 (constituting a transparent display panel).

According to one or more embodiments, the projector 10 is disposed in a transportation machine, such as an automobile 50, disposed, for example, on top of the dashboard of the automobile 50. The combiner 60 is a projection surface that is disposed on a portion of the windshield 20 of the automobile 50. The projector 10 emits a light toward the combiner 60, to project an image onto the combiner 60. The combiner 60 is configured from a polarizing element, a wavelength selecting element, a half-mirror, and the like, thus displaying the image that is projected from the projector 10 superimposed on the view outside of the vehicle. The windshield 20 may be provided with the function of the combiner 60.

FIG. 2 is a diagram illustrating one example of a view seen by a user through a windshield 20 according to one or more embodiments. As described above, the combiner 60 is disposed on the windshield 20. An image that is projected by the projector 10 is displayed on the combiner 60. The projector 10, as illustrated in FIG. 2, has a function for displaying, on the combiner 60, information regarding car navigation (for example, information regarding a route to a destination), information regarding the automobile (for example, fuel consumption information), and the like. For example, the projector 10 may display, on the combiner 60, route information 61 to a destination (arrow marks indicating respective routes to "Osaka" and "Kobe"), and distance information 62 to the destination ("1.0 km") (as one example of a content image). As illustrated in FIG. 2, the image projected by the projector 10 is displayed in the view looking ahead, making it possible for the user to ascertain information that is useful in driving, without shifting the line of sight away while driving the automobile 50.

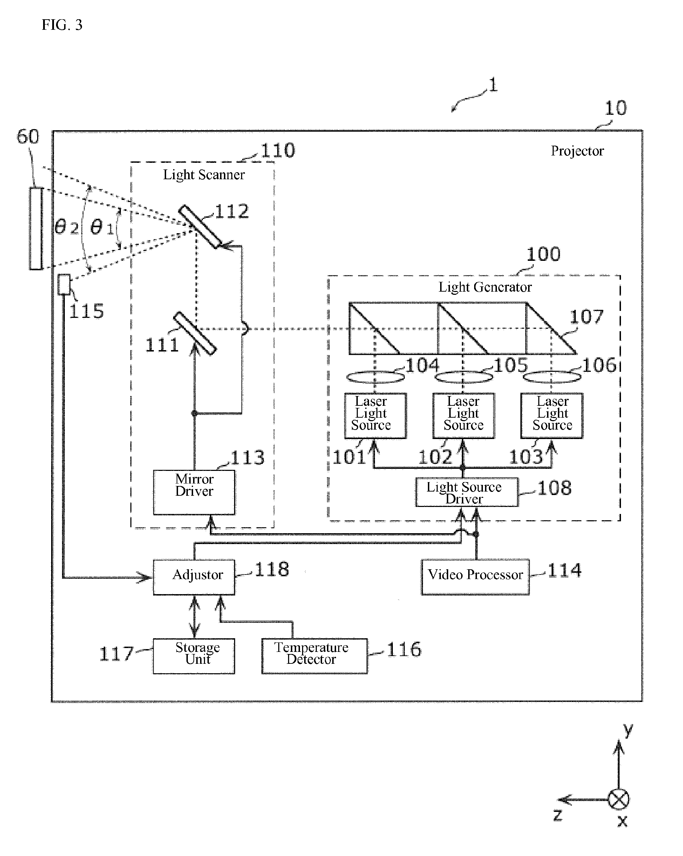

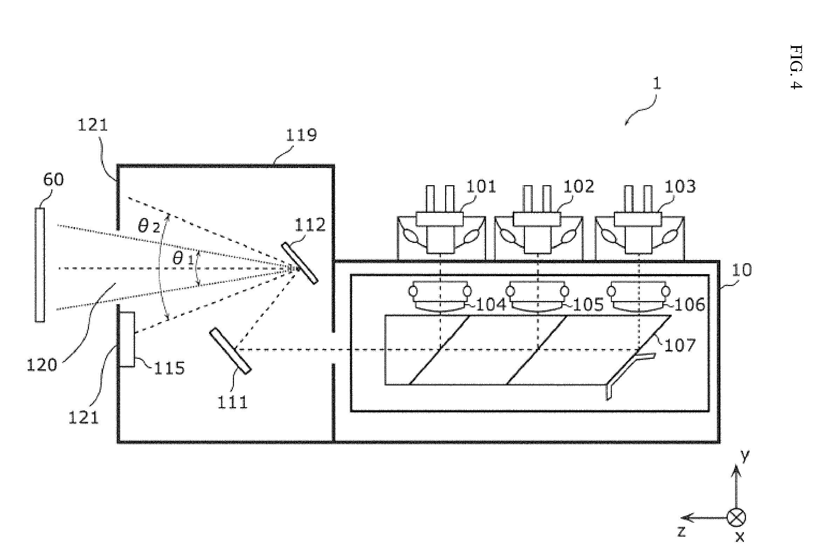

FIG. 3 is a block diagram illustrating a hardware configuration for an HUD device 1 according to one or more embodiments. FIG. 4 is a diagram illustrating schematically the layout of the various components within a projector 10 according to one or more embodiments. In FIG. 3 and FIG. 4 the arrangements of the configuring components are different, where FIG. 4 shows an actual arrangement for the configuring components.

According to one or more embodiments, the projector 10 comprises a light generator 100, a light scanner 110, a video processor 114, a light position detector 115, a temperature detector 116, a storage unit 117, and an adjustor 118.

According to one or more embodiments, the light generator 100 emits a red light, a green light, and a blue light. The light generator 100 includes laser light sources 101 to 103, collimator lenses 104 to 106, a dichroic prism 107, and a light source driver 108.

According to one or more embodiments, the laser light source 101 is a laser diode that emits a blue laser light to a first mirror 111, described below, of the light scanner 110 through the collimator lens 104 and the dichroic prism 107. The laser light source 102 is a laser diode that emits a green laser light to be first mirror 111 of the light scanner 110 through the collimator lens 105 and the dichroic prism 107. The laser light source 103 is a laser diode that emits a red laser light to be first mirror 111 of the light scanner 110 through the collimator lens 106 and the dichroic prism 107.

According to one or more embodiments, the collimator lenses 104 to 106 form the laser lights that are emitted from the respective laser light sources 101 to 103 into collimated lights.

According to one or more embodiments, the dichroic prism 107 modifies the optical paths of the respective laser lights that have passed through the collimator lenses 104 to 106, to direct them to the first mirror 111.

According to one or more embodiments, the light source driver 108 adjusts the brightness of the laser light sources 101 to 103 through providing driving currents to the laser light sources 101 to 103.

According to one or more embodiments, the light scanner 110 projects an image onto the combiner 60 through scanning, at a first scanning angle θ1, the laser light that is emitted from the light generator 100. Moreover, the light scanner 110 directs the laser light that is emitted from the light generator 100 to a light position detector 115 through scanning at a second scanning angle θ2 that is larger than the first scanning angle θ1. More specifically, the light scanner 110 includes a first mirror 111, a second mirror 112, and a mirror driver 113. The first mirror 111 is one example of a first reflecting member, and scans the laser light in the horizontal direction through reciprocating in the horizontal direction. The second mirror 112 is one example of a second reflecting member, and scans the laser light in the vertical direction through reciprocating in the vertical direction. The second mirror 112 scans the laser light with the aforementioned first scanning angle θ1 or the aforementioned second scanning angle θ2. The mirror driver 113 causes the first mirror 111 and the second mirror 112 to reciprocate through supplying driving signals to the first mirror 111 and the second mirror 112.

According to one or more embodiments, the video processor 114 performs control so as to project the image onto the combiner 60 based on an image signal that is inputted from the outside. Specifically, the video processor 114 controls the driving of the first mirror 111 and the second mirror 112 through the mirror driver 113 based on the image signal. Along with this, the video processor 114 controls the emission of the laser lights by the laser light sources 101 to 103, through the light source driver 108. That is, the light source driver 108 performs control so that laser lights of colors corresponding to the individual pixels of the image are emitted from the laser light sources 101 to 103, synchronized with the scanning timing of the laser lights by the light scanner 110. The image that displays the route information 61 and the distance information 62, projected on the combiner 60, is formed by the image forming laser light sources 101 to 103.

According to one or more embodiments, the light position detector 115 is disposed at a location that can receive a light that is incident in a direction that is outside of the combiner 60, to detect the position of the incident light (the x coordinate and y coordinate thereof). The light position detector 115 is configured from, for example, a Position Sensitive Detector (PSD). Specifically, the light position detector 115 is provided at a location that receives light that is incident in a direction that is to the outside of the combiner 60 in the vertical direction (the y axial direction). That is, when the laser light is scanned by the second mirror 112 at the first scanning angle θ1, the light does not arrive at the light position detector 115, but when the second mirror 112 scans the laser light with the second scanning angle 02, the light arrives at the light position detector 115.

According to one or more embodiments, a temperature detector 116 detects the temperature within the projector 10. The temperature detector 116 is configured from, for example, a thermistor.

According to one or more embodiments, the storage unit 117 stores a reference table that shows the relationship between the temperature within the projector 10 and the emission timing of the laser lights from the laser light sources 101 to 103. An example of a reference table will be described below.

According to one or more embodiments, the adjustor 118 adjusts the emission timing of the individual laser lights by the light generator 100 so as to suppress the relative misalignment between the three colored laser lights on the combiner 60, based on the positions of the three colored laser lights detected by the light position detector 115. The adjustments to the emission timing cause the laser lights of the individual colors, corresponding to the same pixel, to arrive at the same position on the combiner 60.

According to one or more embodiments, the first mirror 111 and the second mirror 112, as illustrated in FIG. 4, are contained within an enclosure 119. The enclosure 119 has an opening 120 at the position on the light path of the laser light that is scanned with the first scanning angle θ1. Moreover, the enclosure 119 blocks the laser light at the position 121 when scanning at greater than the first scanning angle θ1 and less than the second scanning angle θ2. The light position detector 115 is provided at the position 121, and thus the laser light that is directed toward the light position detector 115 does not arrive outside of the enclosure 119.

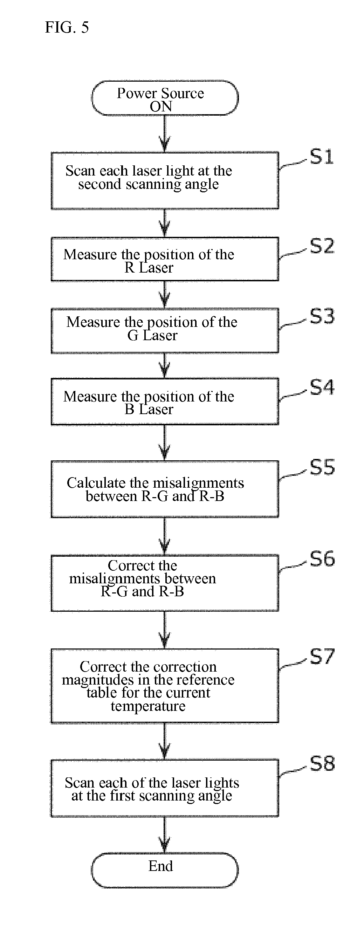

A process according to one or more embodiments for adjusting optical axis misalignment in the projector 10 will be explained next. FIG. 5 is a flowchart for the processes executed by the projector 10. The procedures illustrated in FIG. 5 are executed when the projector 10 is started up, that is, when the power source to the projector 10 is started.

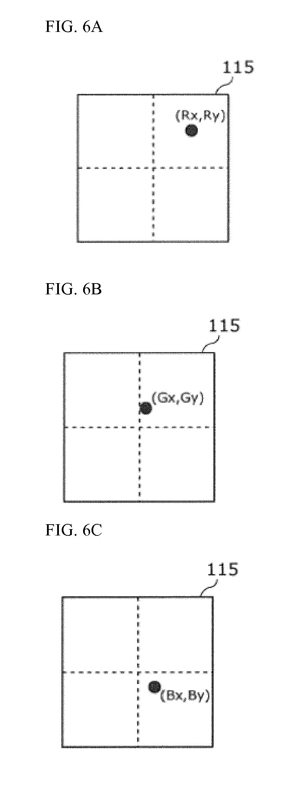

According to one or more embodiments, when the supply of power to the projector 10 is started, the mirror driver 113 drives the first mirror 111 and the second mirror 112 to scan the laser light that is emitted by the laser light source 103 at the second scanning angle in the vertical direction. However, the laser light source 103 is controlled by the light source driver 108 so as to output the laser light at only a timing with which the light that is reflected by the second mirror 112 will arrive at the light position detector 115. Similarly, the mirror driver 113 drives the first mirror 111 and the second mirror 112 to scan the laser light that is emitted by the laser light source 102 at the second scanning angle in the vertical direction. Moreover, the mirror driver 113 drives the first mirror 111 and the second mirror 112 to scan the laser light that is emitted by the laser light source 101 at the second scanning angle in the vertical direction. As a result, the light position detector 115 is sequentially illuminated by the laser lights that are emitted monochromatically from the laser light source 103, the laser light source 102, and the laser light source 101 (S1). For example, the red laser light, the green laser light, and the blue laser light are directed to the light position detector 115 as illustrated in FIG. 6A, FIG. 6B, and FIG. 6C.

According to a first example of one or more embodiments, the light position detector 115 measures the position of the red laser light (S2). For example, in FIG. 6A, the red laser light position (x coordinate, y coordinate) is measured as (Rx, Ry).

According to a second example of one or more embodiments, the light position detector 115 measures the position of the green laser light (S3). For example, in FIG. 6B, the green laser light position (x coordinate, y coordinate) is measured as (Gx, Gy).

According to a third example of one or more embodiments, the light position detector 115 measures the position of the blue laser light (S4). For example, in FIG. 6C, the blue laser light position (x coordinate, y coordinate) is measured as (Bx, By).

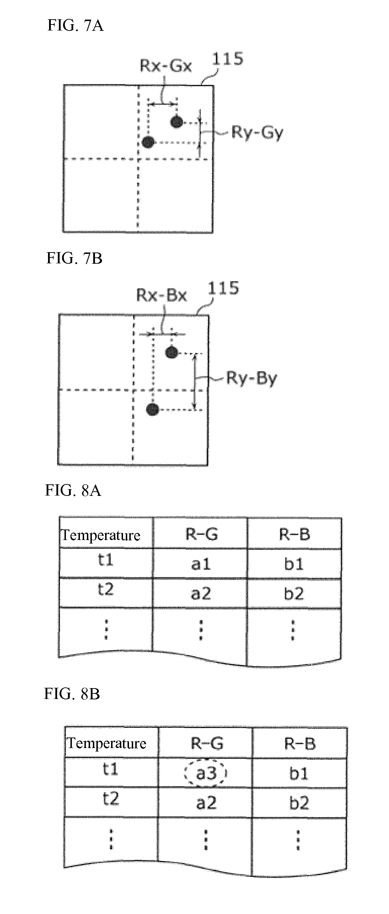

According to one or more embodiments, the adjustor 118, as illustrated in FIG. 7A, calculates, based on the measured positions for each of the laser lights, the amount of misalignment in the horizontal direction between the red laser light and the green laser light (Rx - Gx), and the amount of misalignment in the vertical direction between the red laser light and the green laser light (Ry - Gy). Moreover, as illustrated in FIG. 7B, the adjustor 118 calculates the amount of misalignment between the red laser light and the blue laser light in the horizontal direction (Rx - Bx) and the amount of misalignment between the red laser light and the blue laser light in the vertical direction (Ry-By)(S5).

According to one or more embodiments, the adjustor 118, based on the amount of misalignment in the horizontal direction (Rx - Gx) and the amount of misalignment in the vertical direction (Ry - Gy) corrects the misalignment accompanying the misalignment of the optical axes between the red laser light and the green laser light. Moreover, the adjustor 118, based on the amount of misalignment in the horizontal direction (Rx - Bx) and the amount of misalignment in the vertical direction (Ry - By) corrects the misalignment accompanying the misalignment of the optical axes between the red laser light and the blue laser light (S6). That is, the emission timings of the laser lights from the individual laser light sources are adjusted so that the blue laser light and the green laser light will arrive at the position of the red laser light (Rx, Ry). The relationship between the amount of misalignment and the emission timing is established in advance. For example, in the example illustrated in FIG. 7A and FIG. 7B, both the green laser light and the blue laser light are emitted with a lag in the horizontal direction, and emitted early in the vertical direction, relative to the red laser light. Because of this, the green laser light and blue laser light will have the emission timings thereof adjusted so as to be advanced in the horizontal direction and delayed in the vertical direction relative to the present timing.

According to one or more embodiments, the adjustor 118 writes the adjustment value for the emission timing as a correction amount to the reference table (S7). FIG. 8A shows an example of a reference table. For each temperature within the projector 10, adjustment values for the emission timings of the green laser light and the blue laser light are stored in the reference table as correction amounts. For example, when the temperature of the projector 10 is t1, then the adjustment value for the emission timing of the green laser light relative to the red laser light (the difference between the emission timing of the red laser light and the emission timing of the blue laser light) is a1. Moreover, when the temperature of the projector 10 is t1, then the adjustment value for the emission timing of the blue laser light relative to the red laser light (the difference between the emission timing of the red laser light and the emission timing of the blue laser light) is b1. When the temperature within the projector 10, detected by the temperature detector 116, is t1 and the adjustment value for the emission timing of the green laser light relative to the red laser light, calculated in the procedure in S6, is a3, then, as illustrated in FIG. 8B, the adjustor 118 writes the adjustment value a3 to the reference table.

Thereafter, according to one or more embodiments, the light source driver 108 drives the laser light sources 101 to 103 so as to emit the respective laser lights according to the emission timings adjusted by the adjustor 118. That is, the laser light sources 101 to 103 are driven so that the green laser light and the blue laser light are delayed by the time of the adjustment value relative to the emission timing of the red laser light. Moreover, the light scanner 110 scans the individual laser lights with the first scanning angle, to project the image onto the combiner 60 (S8). Doing so makes it possible to project, onto the combiner 60, a color image that is free from misalignment.

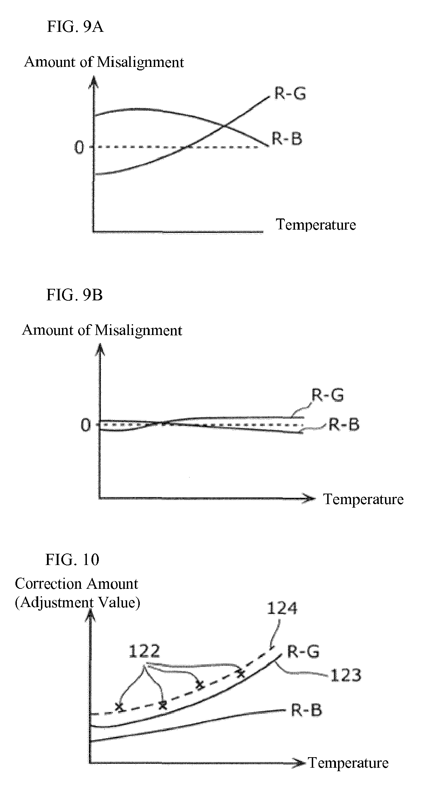

According to one or more embodiments, for each temperature within the projector 10, the adjustment values for the emission timings of the green laser light and the blue laser light are stored as correction amounts in the reference table. This is because the amounts of misalignment will vary depending on differences in expansion of the enclosure of the projector 10 depending on the temperature. FIG. 9A is a graph illustrating the relationship between the temperature and the amount of misalignment. For example, the amount of misalignment of the green laser light relative to the red laser light (R-G) becomes larger the higher the temperature within the projector 10. In contrast, the amount of misalignment of the blue laser light relative to the red laser light (R-B) becomes smaller the higher the temperature within the projector 10. Using the reference table to adjust the emission timings of the laser lights makes it possible to approach zero misalignment, regardless of the temperature, as illustrated in FIG. 9B. Moreover, when the correction amounts that appear in the reference table are graphed, then, for example, a graph of the solid line such as illustrated in FIG. 10 is obtained; however, when the adjustment value 122 for the emission timing of the green laser light relative to the red laser light is updated through the procedure in S7, for example, the graph of the correction amounts for the green laser light (R-G), will move toward the dotted line 124 from the solid line 123.

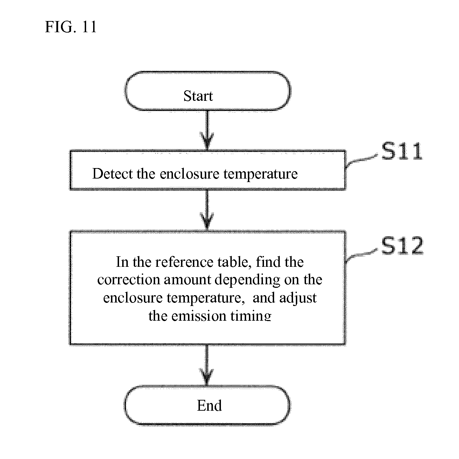

FIG. 11 is a flowchart for processes executed when projecting an image onto the combiner 60.

According to one or more embodiments, the temperature detector 116 detects the temperature within the enclosure 119 of the projector 10 (S11). The adjustor 118 reads out the adjustment values for the emission timings of the green laser light and the blue laser light corresponding to the temperature that has been detected. The light source driver 108 drives the laser light sources 101 to 103 so as to delay, by the time of the adjustment value, the green laser light and the blue laser light, in relation to the emission timing of the red laser light, in accordance with the adjustment values that have been read out (S12).

According to one or more embodiments, when there is an optical axis correction request regarding the projector 10 from the outside, then the adjustor 118 may correct the amount of misalignment based on information from the light position detector 115, in the same manner as in the procedure when the power source is turned ON, illustrated in FIG. 5, rather than using the reference table.

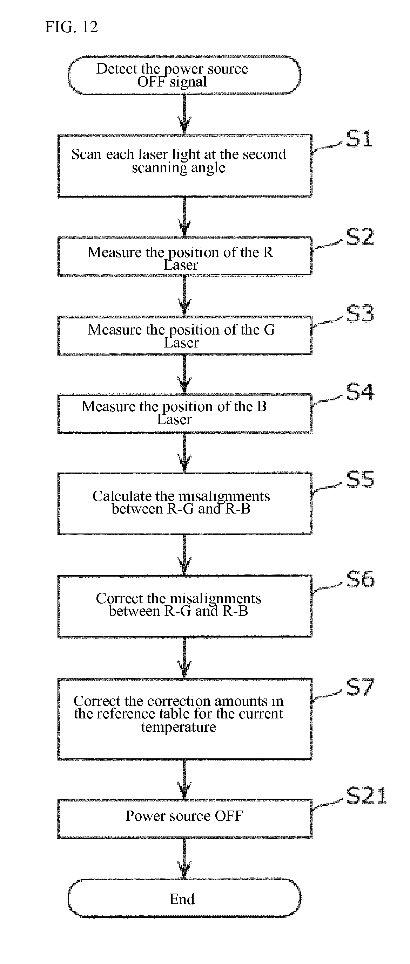

FIG. 12 is a flowchart according to one or more embodiments for the procedure that is executed when stopping the projector 10, that is, when turning the power source of the projector 10 OFF.

According to one or more embodiments, when the user presses the power source switch (not shown) of the projector 10, a power source OFF signal is sent to the various processing portions in the projector 10. In response to the detection of the power source OFF signal, procedures are executed that are identical to the procedures in S1 through S7, illustrated in FIG. 5. Thereafter, the power source is turned OFF (S21). Doing so makes it possible to update the reference table even when turning the power source OFF.

As explained above, in one or more embodiments, a light position detector 115 is provided in the projector 10, making it possible to adjust for the misalignment of the optical axes, that is, to adjust the emission timings of the laser lights, by the light scanner 110 scanning the laser light with a second scanning angle that is larger than the first scanning angle that is usually used. Because of this, it is possible to adjust for optical axis misalignment between the laser light sources, while preventing an increase in cost.

Moreover, even when there is a change in temperature within the enclosure 119 of the projector 10, the emission timings for the laser lights can be adjusted in accordance with the change in temperature.

Moreover, even when the output timing has become misaligned through optical axis misalignment due to aging, the emission timing of the laser lights can be adjusted through updating values in the reference table.

Moreover, because the enclosure 119 is used as a blocking structure, the light that is directed toward the light position detector 115 does not arrive at the outside of the enclosure 119. Because of this, it is possible to adjust the emission timings of the laser lights without the user being aware.

The scope of the present invention is not limited to the specific embodiments described above. One skilled in the art would appreciate that various other modifications can be made to the above-described embodiments without deviating from the scope or intent of the present invention.

For example, while, in one or more embodiments described above, the emission timings of the laser lights from the individual laser light sources were adjusted so that the blue laser light and the green laser light will arrive at the position of the red laser light (Rx, Ry), instead the emission timings of the laser lights from the individual laser light sources may be adjusted so that the other laser lights will arrive at the position of the green laser light or the blue laser light. Furthermore, one of ordinary skill in the art would appreciate that certain "adjustors" and "detectors" according to one or more embodiments may be implemented by a processor or circuit using known methods.

A projector according to one or more embodiments of the present invention can also be applied to a head-up display device that is mounted onboard an automobile.

### Explanation of Reference Numerals

1: HUD Device
10: Projector
20: Windshield
50: Automobile
60: Combiner
61: Route Information
62: Distance Information
100: Light Generator
110: Light Scanner
101, 102, 103: Laser Light Sources
104, 105, 106: Collimator Lenses
107: Dichroic Prism
108: Light Source Driver
111: First Mirror
112: Second Mirror
113: Mirror Driver
114: Video Processor
115: Light Position Detector
116: Temperature Detector
117: Storage Unit
118: Adjustor
119: Enclosure
120: Opening
121: Position
122: Adjustment Value
123: Solid Line
124: Dotted Line

## Claims

1. A projector configured to project an image on a projection surface, comprising:
a light generator (100) configured to emit a first light and a second light that are lights of mutually differing color components;
a light position detector (115) disposed so as to receive light that is incident in a direction outside of the projection surface and configured to detect a position of the incident light;
a light scanner (110) configured to project the image onto the projection surface by scanning the first light and the second light with a first scanning angle, and configured to direct the first light and the second light to the light position detector by scanning the first light and the second light with a second scanning angle that is larger than the first scanning angle; and
an adjustor (118) configured to adjust, based on a position of the first light and a position of the second light detected by the light position detector (115), an emission timing of the first light and an emission timing of the second light so as to suppress relative misalignment between the first light and the second light on the projection surface.

2. The projector as set forth in claim 1, further comprising:
a temperature detector (116) configured to detect a temperature within the projector,
wherein the adjustor (118) is configured to adjust, based on the position of the first light and the position of the second light, the emission timing of the first light and the emission timing of the second light so as to suppress relative misalignment between the first light and the second light on the projection surface at the temperature detected by the temperature detector (116).

3. The projector as set forth in claim 2, further comprising:
a storage unit (117) configured to store a reference table showing a relationship between the temperature within the projector and the emission timing of the first light and the emission timing of the second light,
wherein the adjustor (118) is configured to calculate, based on the position of the first light and the position of the second light, the emission timing of the first light and the emission timing of the second light so as to suppress relative misalignment between the first light and the second light on the projection surface and to update the reference table value based on the calculated emission timings and the temperature detected by the temperature detector (116).

4. The projector as set forth in any one of claim 1 through claim 3, further comprising:
an enclosure configured to contain the light scanner (110) and to comprise an opening (120) at a position on a light path of the first light and the second light, wherein the first light and the second light are scanned at an angle greater than the first scanning angle but less than the second scanning angle and are blocked at a position on the light path.

5. The projector as set forth in any one of claim 1 through claim 4, wherein the first light and the second light are spotlights directed to the light position detector (115) by the light scanner (110).

6. The projector as set forth in any one of claim 1 through claim 5, wherein the light scanner (110) is configured to direct the first light and the second light, by scanning at the second scanning angle (θ2), to the light position detector (115) when the image is not projected onto the projection surface.

7. The projector as set forth in claim 6, wherein the light scanner (110) is configured to direct the first light and the second light, by scanning at the second scanning angle (θ2), to the light position detector (115) when the projector is started or stopped.

8. The projector as set forth in any one of claim 1 through claim 7, wherein the light scanner (110) comprises:
a first reflecting member (111) for scanning the first light and the second light in a horizontal direction by reciprocating in the horizontal direction; and
a second reflecting member (112) for scanning the first light and the second light in a vertical direction by reciprocating in the vertical direction,
wherein the first scanning angle and the second scanning angle are scanning angles for the first light and the second light by the second reflecting member (112), and
wherein the light position detector is positioned so as to receive incident light directed outside of the projection surface in the vertical direction.

9. A head-up display device comprising:
a projector (10) as set forth in any one of claim 1 through claim 8; and
a transparent display panel (60) onto which an image is displayed.

10. A method for controlling a projector for projecting an image on a projection surface, comprising:
emitting a first light and a second light that are lights of mutually differing color components using a light generator (100);
receiving light that is incident in a direction outside of the projection surface and detecting a position of the incident light using a light position detector (115);
scanning the first light and the second light with a first scanning angle (θ1);
scanning the first light and the second light with a second scanning angle (θ2) that is larger than the first scanning angle;
directing the first light and the second light to the light position detector (115); and
adjusting, based on a position of the first light and a position of the second light detected by the light position detector (115), an emission timing of the first light and an emission timing of the second light so as to suppress relative misalignment between the first light and the second light on the projection surface.

11. The method as set forth in claim 10, further comprising:
detecting a temperature within the projector (10); and
adjusting, based on the position of the first light and the position of the second light, the emission timing of the first light and the emission timing of the second light so as to suppress relative misalignment between the first light and the second light on the projection surface at the temperature detected by the temperature detector.

12. The method as set forth in claim 10, further comprising:
scanning the first light and the second light at an angle greater than the first scanning angle (θ1) but less than the second scanning angle (θ2); and
blocking the first light and the second light at a position on the light path.

13. The method as set forth in claim 10, wherein the first light and the second light are spotlights directed to the light position detector (115) by the light scanner (110).

14. The method as set forth in claim 10, further comprising scanning the first light and the second light at the second scanning angle (θ2) and directing the first light and the second light to the light position detector (115) when the image is not projected onto the projection surface.

15. The method as set forth in claim 10, further comprising:
scanning the first light and the second light in a horizontal direction by reciprocating in the horizontal direction; and
scanning the first light and the second light in a vertical direction by reciprocating in the vertical direction.
